# EUROPÄISCHE PATENTANMELDUNG

(11) **EP 2 548 937 A1**
(43) Veröffentlichungstag der Anmeldung: **23.01.2013**
(21) Anmeldenummer: 12173188.9
(22) Anmeldetag: 22.06.2012
(51) Int. Cl.: C10L 1/02, C11B 3/00, C11B 3/16, C11C 3/00, C07C 29/70, C07C 31/30

(54) **Alkali- und Erdalkalimetall-Glycerate zur Entsäuerung und Trocknung von Fettsäureestern**

(30) Priorität: 21.07.2011 DE 102011079550
(71) Anmelder: Evonik Degussa GmbH, 45128 Essen (DE)
(72) Erfinder: Ruwwe, Johannes, Dr., 53859 Niederkassel (DE); Lichtenheldt, Martin, Dr., 51145 Köln (DE); Frank, Michael, Dr., 53229 Bonn (DE); Beu, Axel, 53842 Troisdorf (DE)

(57) **Zusammenfassung**

Die vorliegende Erfindung betrifft Zusammensetzungen umfassend Alkalimetall-Glycerate und Glycerin und deren Verwendung zur Entsäuerung und Trocknung von Fettsäureestern.

## Beschreibung

Die vorliegende Erfindung betrifft Zusammensetzungen umfassend Alkalimetall-Glycerate und Glycerin und deren Verwendung zur Entsäuerung und Trocknung von Fettsäureestern.

Fettsäurealkylester einwertiger Alkohole finden seit einiger Zeit eine wichtige Anwendung in der Verwendung als Biodiesel, einem auf nachwachsenden Rohstoffen basierendem Ersatz für fossilen Diesel.

Die Herstellung von Biodiesel erfolgt in der Regel mittels basenkatalysierter Umesterung von Triglyceriden (The Biodiesel Handbook, G. Knothe, J. van Gerpen, J. Krahl, Ed. AOCS Press (2005); Biodiesel - The comprehensive handbook, M. Mittelbach, C. Remschmidt (2004); Bioresource Technology 2004, 92, 297; Applied Energy 2010, 87, 1083; Chimica Oggi/Chemistry today 2008, 26).

Für diese Umesterung ist es vorteilhaft, wenn das eingesetzte Glycerid, insbesondere Triglycerid, möglichst wasser- und fettsäurefrei ist. Fettsäuren neutralisieren den alkalischen Katalysator, von dem somit eine größere Menge eingesetzt werden muss. Wasser führt zur verstärkten Ausbildung von Seifen als Nebenprodukten, was die Ausbeute verringert. Beide Effekte erschweren weiterhin die Abtrennung des freigesetzten Glycerins.

Biodiesel kann ebenfalls mittels sauer katalysierter Veresterung von Fettsäuren mit monohydrischen Alkoholen, insbesondere Methanol oder Ethanol, hergestellt werden (The Biodiesel Handbook (2nd edition), G. Knothe, J. Krahl, J. van Gerpen, Ed. AOCS Press (2009); WO 95/02661; Adv. Synth. Catal. 2006, 348, 75); bei dieser Reaktion wird ein Gemisch aus Biodiesel, nicht umgesetzten Fettsäuren, nicht umgesetztem Alkohol und freigesetztem Wasser erhalten. Zur Verwendung als Biodiesel muss dieser von den Nebenprodukten noch befreit werden.

Zur Entfernung von Fettsäuren aus Glyceriden, insb. Triglyceriden können Standardverfahren der Raffination eingesetzt werden, wie zum Beispiel Destillation oder Neutralisation (A. Thomas in Ullmann's Encyclopedia of Industrial Chemistry - Fats and Fatty Oils). Nachteilig daran ist der hohe Energieaufwand der Destillation bzw. die Tatsache, dass wasserhaltige Neutralisationsmittel wie Natronlauge eingesetzt werden und den Wassergehalt weiter erhöhen.

Wasser lässt sich zwar mittels Destillation aus dem Triglycerid entfernen, die gleichzeitige Anwesenheit von Wasser und einem Alkalimetallhydroxid führt jedoch neben der Neutralisation auch zu einer Verseifung.

Um Biodiesel von Fettsäuren zu trennen, kann ebenfalls die Destillation eingesetzt werden. Diese Destillation ist jedoch recht aufwendig, da die Siedepunkte der Fettsäuren und korrespondierenden Fettsäurealkylester nahe beieinander liegen können und ein hoher Energieeinsatz erforderlich ist. Wasser und Alkohole wie Methanol oder Ethanol lassen sich jedoch gut mittels Destillation vom Biodiesel abtrennen.

WO 95/02661 beschreibt, dass ein Gemisch aus Biodiesel, Fettsäuren und weiteren Nebenprodukten aus einem Veresterungsprozess einem Biodieselprozess durch Umesterung zugeführt wird, wobei die Fettsäuren in ihre korrespondierenden Seifen überführt werden, in der Glycerinphase gelöst und somit vom Biodiesel abgetrennt werden.

Nachteilig an diesem Verfahren ist, dass dabei die Kapazität eines Reaktors belegt wird, der eigentlich für die Umesterung und nicht die Aufarbeitung eines Stromes einer Veresterung gedacht ist. Ebenfalls nachteilig ist, dass beim Zuführen des Gemisches aus Biodiesel, Fettsäuren und weiteren Nebenprodukten in den Umesterungsreaktor eine zusätzliche Menge alkalischer Katalysator zugegeben werden muss, was je nach Katalysatortyp zusätzliche Kosten erzeugt. Weiterhin kann bei der Verwendung von Alkalimetallhydroxiden neben der Neutralisation auch wieder Verseifung und damit ein Ausbeuteverlust auftreten.

Aufgabe der vorliegenden Erfindung war es, ein Verfahren zu finden, mit dem ein fettsäurehaltiges Glycerid oder ein fettsäurehaltiger Fettsäurealkylester, beispielsweise Biodiesel, einfach und möglichst in einer wasserfreien Umgebung von Fettsäuren befreit werden kann.

Erfindungsgemäß wird diese Aufgabe gelöst, indem ein fettsäurehaltiges Glycerid oder ein fettsäurehaltiger Fettsäurealkylester mit einer Zusammensetzung umfassend mindestens ein Alkali- oder Erdalkalimetallglycerat und Glycerin gemischt und einer anschließenden Phasentrennung unterworfen wird.

Demgemäß sind ein erster Gegenstand der vorliegenden Erfindung Zusammensetzungen umfassend mindestens ein Alkali- oder Erdalkalimetall-Glycerat und Glycerin, wobei der Wassergehalt maximal 3 Gew.-%, bezogen auf die Zusammensetzung, beträgt, insbesondere 0,01 bis 1 Gew.-% und ganz besonders bevorzugt 0,1 bis 0,5 Gew.-%.

Ein weiterer Gegenstand der vorliegenden Erfindung ist die Verwendung von Zusammensetzungen umfassend mindestens ein Alkalimetall- oder Erdalkalimetall-Glycerat und Glycerin zur Entfernung von Fettsäuren aus fettsäurehaltigen Glyceriden oder Fettsäurealkylestern und/oder zur Trocknung von Glyceriden oder Fettsäurealkylestern.

Vorzugsweise werden zur Entfernung von Fettsäuren aus fettsäurehaltigen Glyceriden oder Fettsäurealkylestern und/oder zur Trocknung von Glyceriden oder Fettsäurealkylestern Zusammensetzungen umfassend mindestens ein Alkalimetall- oder Erdalkali-Glycerat und Glycerin eingesetzt, bei denen der Wassergehalt maximal 3 Gew.-%, bezogen auf die Zusammensetzung, beträgt, insbesondere 0,01 bis 1 Gew.-% und ganz besonders bevorzugt 0,1 bis 0,5 Gew.-%.

Ein wesentlicher Bestandteil der erfindungsgemäßen Zusammensetzungen sind die enthaltenen Alkalimetall- oder Erdalkalimetall-Glycerate. Alkalimetall-Glycerate sind dem Fachmann als solches bekannt. Alkalimetall-Glycerate lassen sich z. B. wie in WO 2009/067809 oder in J. Appl. Polym. Sci. 2003, 87, 2100, oder in "Chemical Properties and Derivatives of Glycerine" (1963), beschrieben herstellen.

ES 2 277 727 beschreibt die Verwendung von Alkali- und Erdalkalisalzen des Glycerins als Umesterungskatalysatoren für die Biodieselherstellung. DE 44 36 517 beschreibt die Verwendung von Natrium- oder Kalium-Glycerat als Umesterungskatalysatoren in Lösung in Glycerin im Gemisch mit Methanol oder Ethanol zur Herstellung von Fettsäuremethyl- oder - ethylestern.

WO 97/33956 offenbart die Herstellung nahezu wasserfreier Alkalimetall-Glyceratlösungen und deren Anwendung als Katalysator für Umesterungsreaktionen. Eine ähnliche Reaktion beschreibt die EP 0 428 249, bei der Alkalimetall-Glycerate Bestandteile eines Katalysatorgemisches sind.

DE 199 25 871 beschreibt die Verwendung der in einem Biodieselverfahren erhaltenen Glycerinphase, die noch alkalischen Katalysator enthält, zur Entfernung von Fettsäuren in Triglyceriden, welche zu Biodiesel umgesetzt werden sollen. Dieses Verfahren beruht auf der Neutralisation und gleichzeitigen Extraktion der Fettsäuren in die Glycerinphase.

Für den Fall, dass diese zurückgeführte Glycerinphase keine zur Neutralisation der Fettsäuren ausreichende Menge alkalischen Katalysators enthält, sollen entweder zusätzliche Mengen Katalysator wie z. B. Alkalimetallhydroxide oder Alkalimetall-Alkoholate zugesetzt werden. Der Nachteil dieses Verfahren besteht darin, dass die zurückgeführte Glycerinphase Wasser enthalten kann, oder bei der Zugabe von Alkalimetallhydroxiden zur Glycerinphase Wasser frei wird, welches in Gegenwart alkalischer Medien zur Verseifung von Triglyceriden oder von anderen Fettsäurealkylestern führt. Ist es erforderlich die Alkalität der Glycerinphase durch die Zugabe von Alkalimetallalkoholaten anzupassen, können höhere Kosten entstehen.

EP 0 806 471 beschreibt die Verwendung von Glycerin bzw. einer Glycerinphase beim Rückgewinnen von Ethanol aus einem Gemisch aus Fettsäureethylester, Ethanol und Wasser, wobei das eingesetzte Glycerin das Wasser während dieses Destillationsprozesses retardiert und die Rückführung von Ethanol mit einem geringeren Wassergehalt als ohne Einsatz des Glycerins erlaubt. Nachteilig an diesem Verfahren ist, dass trotz des eingesetzten Glycerins weiterhin Wasser den Umesterungsprozess stören kann, so dass Verseifungsreaktionen auftreten können.

DE 43 01 686 beschreibt den Einsatz von Glycerin bzw. einer Glycerinphase zur Wäsche von rohem Fettsäurealkylester aus einem Umesterungsprozess. Bei diesem Schritt wird zwar eine gewisse Reinigung des rohen Fettsäurealkylesters erzielt, dennoch ist aber eine weitere Nachbehandlung mit einem Adsorbens erforderlich. Weiterhin ist dieses Verfahren nicht geeignet, einen Fettsäurealkylester zu entsäuern.

Überraschenderweise wurde nun gefunden, dass Zusammensetzungen umfassend mindestens ein Alkalimetall oder Erdalkalimetall-Glycerat und Glycerin, bei denen der Wassergehalt maximal 3 Gew.-%, bezogen auf die Zusammensetzung, beträgt, in vorteilhafter Weise dazu geeignet sind, fettsäurehaltige Fettsäureester zu entsäuern.

Das Alkali- oder Erdalkalimetall für die Alkalimetall- oder Erdalkalimetall-Glycerate ist insbesondere ausgewählt aus der Gruppe bestehend aus Lithium, Natrium Kalium, Magnesium oder Calcium, vorzugsweise Natrium oder Kalium. Im Sinne der vorliegenden Erfindung werden unter Alkalimetall- oder Erdalkalimetall-Glyceraten, je nach Kation, sowohl einwertige als auch mehrwertige Salze des Glycerins verstanden.

Der Anteil des Alkalimetall- oder Erdalkalimetall-Glycerates in der Zusammensetzung beträgt zwischen 3 und 40 Gew.-%, bevorzugt zwischen 7 und 15 Gew.-%, bezogen auf die Zusammensetzung. Vorzugsweise bestehen die erfindungsgemäßen Zusammensetzungen aus Glycerin, 3 bis 40 Gew.-%, bevorzugt 7 bis 15 Gew.-%, Alkalimetall- oder Erdalkalimetall-Glyceraten und maximal 3 Gew.-%, insbesondere 0,01 bis 1 Gew.-% und ganz besonders bevorzugt 0,1 bis 0,5 Gew.-%, Wasser, wobei die Summe aller Bestandteile 100 Gew.-% ergibt.

Die erfindungsgemäßen Zusammensetzungen umfassend mindestens ein Alkalimetall oder Erdalkalimetall-Glycerat und Glycerin werden durch Reaktion der entsprechenden Alkalimetallhydroxide oder Erdalkalimetallhydroxide bzw. deren wässriger Lösungen mit Glycerin erhalten. Demgemäß sind Verfahren zur Herstellung der erfindungsgemäßen Zusammensetzungen umfassend die Reaktion von Alkalimetallhydroxiden oder Erdalkalimetallhydroxiden oder deren Lösungen mit Glycerin ebenfalls Gegenstand der vorliegenden Erfindung.

Das in den erfindungsgemäßen Zusammensetzungen enthaltene bzw. das in den erfindungsgemäßen Verfahren eingesetzte Glycerin kann aus allen dem Fachmann bekannten Quellen stammen. Bevorzugt wird bei der Herstellung von Biodiesel freiwerdendes Glycerin eingesetzt, besonders bevorzugt wird bei der Herstellung von Biodiesel freiwerdendes rohes Glycerin eingesetzt, welches von Methanol befreit ist.

Die Entfernung von Wasser, das entweder bereits im Glycerin enthalten ist, oder als Lösemittel in die Reaktionsmischung eingetragen wird und durch die Reaktion freigesetzt wird, bis auf einen Gehalt von maximal 3 Gew.-%, bezogen auf die Zusammensetzung, erfolgt destillativ. Die destillative Entfernung des Wassers kann mit oder ohne Schleppmittel erfolgen, bei Normaldruck oder aber bei reduziertem Druck. Übliche Temperaturen bei der Destillation liegen im Bereich von 50 bis 140 °C, insbesondere bei 60 bis 130 °C und ganz besonders bevorzugt bei 70 bis 120 °C.

Vorzugsweise erfolgt die Destillation bei Drucken zwischen 10 mbar und Normaldruck.

Darüber hinaus kann während oder vor der Destillation zusätzlich ein Entschäumer zugegeben werden. Geeignete Entschäumer sind beispielsweise Silikonöle.

Geeignete Apparaturen zur Herstellung der erfindungsgemäßen Zusammensetzungen sind Rührkessel oder Dünnschichtverdampfer.

Für den Fall, dass die erfindungsgemäßen Zusammensetzungen eine zu hohe Viskosität aufweisen, kann ein Alkohol, insbesondere ein niedrigviskoser, wasserfreier Alkohol zugesetzt werden. Bevorzugt werden hierfür Methanol, Ethanol, Propanol oder n-Butanol eingesetzt, besonders bevorzugt wird der Alkohol eingesetzt, der in der jeweiligen Biodieselherstellung Verwendung findet.

Als Schleppmittel kommen mit Wasser nicht mischbare Lösemittel in Frage, die sich aus der Zusammensetzung umfassend mindestens ein Alkalimetall- oder Erdalkalimetall-Glycerat und Glycerin nach der Wasserentfernung ebenfalls durch Destillation entfernen lassen. Vorzugsweise werden Hexan, Heptan, Toluol, Benzol, Cyclohexan, Methylcyclohexan, Ethylcyclohexan als Schleppmittel eingesetzt.

Alternativ lassen sich die erfindungsgemäßen Zusammensetzungen auch durch Umsetzung von Glycerin mit den entsprechenden Alkali- oder Erdalkalimetallen oder deren Amalgamen herstellen.

Ebenfalls ist es möglich die erfindungsgemäßen Zusammensetzungen durch Reaktion von Glycerin mit geeigneten basischen Alkali- oder Erdalkalimetallverbindungen herzustellen. Geeignete basische Alkali- oder Erdalkalimetallverbindungen sind z. B. Natriumhydrid, Kaliumhydrid, Calciumhydrid, Natriumamid, Kaliumamid, Methyllithium, n-Butyllithium, sec-Butyllithium oder tert-Butyllithium.

Die erfindungsgemäßen Zusammensetzungen werden vorzugsweise zur Entfernung von Fettsäuren aus fettsäurehaltigen Glyceriden, insbesondere Triglyceriden, oder Fettsäurealkylestern eingesetzt. Gegenstand der vorliegenden Erfindung sind somit auch Verfahren zur Entfernung von Fettsäuren aus fettsäurehaltigen Glyceriden oder Fettsäurealkylestern und/oder zur Trocknung von Glyceriden oder Fettsäurealkylestern, wobei eine erfindungsgemäße Zusammensetzung umfassend mindestens ein Alkalimetall- oder Erdalkalimetall-Glycerat und Glycerin, bei der der Wassergehalt maximal 3 Gew.-%, bezogen auf die Zusammensetzung, beträgt, eingesetzt wird.

Glyceride im Sinne der vorliegenden Erfindung meint Mono-, Di- und Triglyceride.

In der einfachsten Ausführungsform des erfindungsgemäßen Verfahrens wird das entsprechende Glycerid oder der Fettsäurealkylester mit der erfindungsgemäßen Zusammensetzung gemischt. Anschließend werden die entstandenen Phasen, Glycerinphase und Glycerid- bzw. Fettsäurealkylester-Phase, durch Phasentrennung getrennt.

Das Vermischen der fettsäurehaltigen Glyceride bzw. Fettsäureester mit den erfindungsgemäßen Zusammensetzungen erfolgt beispielsweise durch Verrühren in einem Rührkessel oder durch Mischen in einem statischen Mischer.

Dabei neutralisiert das enthaltene Alkalimetall- oder Erdalkalimetall-Glycerat die vorhandenen Fettsäuren und überführt diese in die korrespondierenden Seifen gemäß folgender Reaktionsgleichung 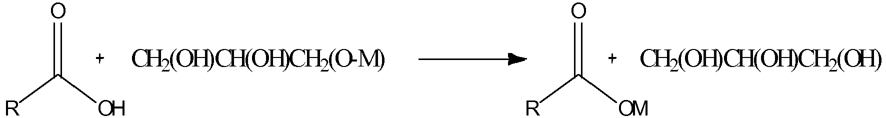 worin R Alkyl bzw. Alkenyl bedeutet, insbesondere mit einer Kettenlänge von 5-23 C-Atomen, und M = Li, Na, K, 0,5 Mg oder 0,5 Ca bedeutet.

Die gebildeten Seifen lösen sich im Glycerin, welches mit den Glyceriden bzw. Fettsäureestern nicht mischbar ist und eine schwere untere Phase ausbildet. Diese schwere Phase kann dann mittels Phasentrennung abgetrennt werden, wobei die entstandenen Seifen auf diese Weise mit abgetrennt werden.

Die Phasentrennung kann erfindungsgemäß mittels Schwerkraft oder auch mittels eines Separators oder einer Zentrifuge erfolgen.

Geeignete Glyceride als Ausgangsstoffe für das erfindungsgemäße Verfahren sind insbesondere Mono-, Di- und Triglyceride der allgemeinen Formel (I) 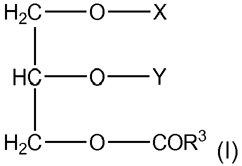 worin X = COR¹ oder H, Y = COR² oder H ist und R¹, R² und R³, die gleich oder verschieden sein können, aliphatische Kohlenwasserstoff-Gruppen mit 3 bis 23 C-Atomen bedeuten, wobei diese Gruppen gegebenenfalls mit einer OH-Gruppe substituiert sein können oder beliebige Gemische aus solchen Glyceriden.

Somit können in Glyceriden gemäß Formel (I) ein oder zwei Fettsäureester durch Wasserstoff ersetzt sein. Die Fettsäureester R¹CO-, R²CO- und R³CO- leiten sich ab von Fettsäuren mit 3 bis 23 Kohlenstoffatomen in der Alkylkette. R¹ und R² oder R¹, R² und R³ können in der obengenannten Formel gleich oder verschieden sein, wenn es sich um Di- oder Trigyceride handelt. Die Reste R¹, R² und R³ gehören den folgenden Gruppen an:
a) Alkylradikale, die verzweigt sein können, jedoch vorzugsweise geradkettig sind und 3 bis 23, vorzugsweise 7 bis 23 C-Atome haben;
b) olefinisch ungesättigte aliphatische Kohlenwasserstoffreste, die verzweigt sein können, jedoch vorzugsweise geradkettig sind, und die 3 bis 23, vorzugsweise 11 bis 21 und insbesondere 15 bis 21 C-Atome besitzen und die 1 bis 6, vorzugsweise 1 bis 3 Doppelbindungen enthalten, welche konjugiert oder isoliert sein können;
c) monohydroxy-substituierte Reste des Typs a) und b), vorzugsweise olefinisch ungesättigte Olefinreste, die 1 bis 3 Doppelbindungen besitzen, insbesondere den Rest der Ricinolsäure.

Die Acylradikale R¹CO-, R²CO- und R³CO- solcher Glyceride, die als Ausgangsmaterialien für das Verfahren der vorliegenden Erfindung geeignet sind, leiten sich ab von den folgenden Gruppen aliphatischer Carbonsäuren (Fettsäuren):
a) Alkansäuren oder deren alkylverzweigte, insbesondere methylverzweigte Derivate, die 4 bis 24 Kohlenstoffatome besitzen, wie zum Beispiel Buttersäure, Valeriansäure, Capronsäure, Heptansäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachidinsäure, Behensäure, Lignocerinsäure, 2-Methylbutansäure, Isobuttersäure, Isovaleriansäure, Pivalinsäure, Isocapronsäure, 2-Ethylcapronsäure, die stellungsisomeren Methylcaprinsäuren, Methyllaurinsäuren und Methylstearinsäuren, 12-Hexylstearinsäure, Isostearinsäure oder 3,3-Dimethylstearinsaure.
b) Alkensäuren, Alkadiensäuren, Alkatriensäuren, Alkatetraensäuren, Alkapentaensäuren und Alkahexaensäuren sowie deren alkylverzweigte, speziell methylverzweigte Derivate mit 4 bis 24 C-Atomen, wie zum Beispiel Crotonsäure, Isocrotonsäure, Caproleinsäure, 3-Lauroleinsäure, Myristoleinsäure, Palmitoleinsäure, Ölsäure, Elaidinsäure, Erucasäure, Brassidinsäure, 2,4-Decadiensäure, Linolsäure, 11,14-Eicosadiensäure, Eleostearinsäure, Linolensäure, Pseudoeleostearinsäure, Arachidonsäure, 4,8,12,15,18,21-Tetracosahexaensäure oder trans-2-Methyl-2-butensäure.
c₁) Monohydroxyalkansäuren mit 4 bis 24 C-Atomen, vorzugsweise mit 12 bis 24 C-Atomen, vorzugsweise unverzweigt, wie zum Beispiel Hydroxybuttersäure, Hydroxyvaleriansäure, Hydroxycapronsäure, 2-Hydroxydodecansäure, 2-Hydroxytetradecansäure, 15-Hydroxypentadecansäure, 16-Hydroxyhexadecansäure, Hydroxyoctadecansäure.
c₂) Ferner Monohydroxyalkensäuren mit 4 bis 24, vorzugsweise mit 12 bis 22 und insbesondere mit 16 bis 22 C-Atomen (vorzugsweise unverzweigt) und mit 1 bis 6, vorzugsweise mit 1 bis 3 und insbesondere mit einer ethylenischen Doppelbindung, wie zum Beispiel Ricinolsäure oder Ricinelaidinsäure.

Bevorzugte Ausgangsstoffe für das erfindungsgemäße Verfahren sind vor allem die natürlichen Fette, die Gemische aus überwiegend Triglyceriden und kleinen Anteilen aus Diglyceriden und/oder Monoglyceriden darstellen, wobei auch diese Glyceride meist wiederum Gemische darstellen und verschiedenartige Fettsäurereste im obengenannten Bereich, insbesondere solche mit 8 und mehr C-Atomen, enthalten. Beispielsweise seien genannt pflanzliche Fette, wie Olivenöl, Kokosfett, Palmkernfett, Babassuöl, Palmöl, Palmkernöl, Erdnußöl, Rapsöl (Rüböl), Ricinusöl, Sesamöl, Sonnenblumenöl, Sojaöl, Hanföl, Mohnöl, Avocadoöl, Baumwollsaatöl, Weizenkeimöl, Maiskeimöl, Kürbiskernöl, Tabaköl, Traubenkernöl, Jatrophaöl, Algenöl, Karanjaöl (Öl der Pongamia pinnata), Camelinaöl (Leindotteröl), Kakaobutter oder auch Pflanzentalge, ferner tierische Fette, wie Rindertalg, Schweinefett, Hühnerfett, Knochenfett, Hammeltalg, Japantalg, Walöl und andere Fischöle sowie Lebertran. Ebenso eingesetzt werden können aber auch einheitliche Tri-, Di- und Monoglyceride, sei es, dass diese aus natürlichen Fetten isoliert oder auf synthetischem Wege gewonnen wurden. Hier seien beispielsweise genannt: Tributyrin, Tricapronin, Tricaprylin, Tricaprinin, Trilaurin, Trimyristin, Tripalmitin, Tristearin, Triolein, Trielaidin, Trilinoliin, Trilinolenin, Monopalmitin, Monostearin, Monoolein, Monocaprinin, Monolaurin, Monomyristin oder gemischte Glyceride, wie beispielsweise Palmitodistearin, Distearoolein, Dipalmitoolein oder Myristopalmitostearin.

Die genannten Glyceride, also Mono-, Di- oder Triglyceride, insbesondere Fettsäureglyceride können in einem anschließenden Umesterungsprozess in Fettsäurealkylester (Biodiesel) umgewandelt werden. Diese Umesterung wird bevorzugt in Gegenwart eines alkalischen Katalysators mit Methanol, Ethanol, n-Propanol, iso-propanol, n-Butanol oder iso-Butanol durchgeführt, besonders bevorzugt sind Methanol und Ethanol.

Ganz besonders bevorzugt sind Umesterungsprozesse, die mit Alkoholaten als alkalischen Katalysatoren in einem wasserfreien Medium durchgeführt werden.

Darüber hinaus werden vorzugsweise auch Fettsäurealkylester im Rahmen der vorliegenden Erfindung eingesetzt, das heißt auch Fettsäurealkylester aus allen dem Fachmann bekannten Quellen können durch Zusammensetzungen und Verfahren gemäß der vorliegenden Erfindung entsäuert werden.

Die so behandelten Fettsäureester können in unterschiedlicher Form weiter um- oder eingesetzt werden.

Beispiele entsprechender Fettsäurealkylester sind insbesondere Alkylester folgender Carbonsäuren (Fettsäuren):
a) Alkansäuren oder deren alkylverzweigte, insbesondere methylverzweigte Derivate, die 4 bis 24 Kohlenstoffatome besitzen, wie zum Beispiel Buttersäure, Valeriansäure, Capronsäure, Heptansäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachidinsäure, Behensäure, Lignocerinsäure, 2-Methylbutansäure, Isobuttersäure, Isovaleriansäure, Pivalinsäure, Isocapronsäure, 2-Ethylcapronsäure, die stellungsisomeren Methylcaprinsäuren, Methyllaurinsäuren und Methylstearinsäuren, 12-Hexylstearinsäure, Isostearinsäure oder 3,3-Dimethylstearinsaure.
b) Alkensäuren, Alkadiensäuren, Alkatriensäuren, Alkatetraensäuren, Alkapentaensäuren und Alkahexaensäuren sowie deren alkylverzweigte, speziell methylverzweigte Derivate mit 4 bis 24 C-Atomen, wie zum Beispiel Crotonsäure, Isocrotonsäure, Caproleinsäure, 3-Lauroleinsäure, Myristoleinsäure, Palmitoleinsäure, Ölsäure, Elaidinsäure, Erucasäure, Brassidinsäure, 2,4-Decadiensäure, Linolsäure, 11,14-Eicosadiensäure, Eleostearinsäure, Linolensäure, Pseudoeleostearinsäure, Arachidonsäure, 4,8,12,15,18,21-Tetracosahexaensäure oder trans-2-Methyl-2-butensäure.
c₁) Monohydroxyalkansäuren mit 4 bis 24 C-Atomen, vorzugsweise mit 12 bis 24 C-Atomen, vorzugsweise unverzweigt, wie zum Beispiel Hydroxybuttersäure, Hydroxyvaleriansäure, Hydroxycapronsäure, 2-Hydroxydodecansäure, 2-Hydroxytetradecansäure, 15-Hydroxypentadecansäure, 16-Hydroxyhexadecansäure, Hydroxyoctadecansäure.
c₂) Ferner Monohydroxyalkensäuren mit 4 bis 24, vorzugsweise mit 12 bis 22 und insbesondere mit 16 bis 22 C-Atomen (vorzugsweise unverzweigt) und mit 1 bis 6, vorzugsweise mit 1 bis 3 und insbesondere mit einer ethylenischen Doppelbindung, wie zum Beispiel Ricinolsäure oder Ricinelaidinsäure.

Die erfindungsgemäß eingesetzten Fettsäurealkylester leiten sich von den vorab genannten Carbonsäuren durch Veresterung mit Alkoholen ab. Insbesondere handelt es sich bei den Fettsäurealkylestern um Ester mit einwertigen Alkoholen. Unter einwertigen Alkoholen im Sinne der vorliegenden Erfindung werden Alkohole mit nur einer OH-Gruppe verstanden. Beispiele einwertiger Alkohole sind Methanol, Ethanol, n-Propanol, iso-Propanol und n-Butanol, iso-Butanol, sec-Butanol oder tert-Butanol, sowie verzweigte oder längerkettige, gegebenenfalls ebenfalls verzweigte Alkohole, wie beispielsweise Amylalkohol, tert-Amylalkohol, n-Hexanol und/oder 2-Ethylhexanol. Bevorzugt sind die vorab genannten Carbonsäuren mit Methanol oder Ethanol verestert.

Handelt es sich bei den eingesetzten Ausgangsstoffen um Fettsäurealkylester, beispielsweise Biodiesel, z. B. aus einem Veresterungsprozess, können diese gewaschen, gegebenenfalls weiter getrocknet und anschließend als spezifikationsgerechter Biodiesel eingesetzt werden. Insbesondere vorteilhaft sind die erfindungsgemäßen Verfahren bei der Herstellung von Biodiesel. Ohne die Behandlung mit der erfindungsgemäßen Zusammensetzung gelingt es nicht, durch Wäsche und Trocknung des Fettsäurealkylesters die Spezifikation für Biodiesel hinsichtlich der Säurezahl und des Estergehaltes einzuhalten. Durch den Einsatz der erfindungsgemäßen Zusammensetzungen in den erfindungsgemäßen Verfahren wird in vorteilhafter Weise der Zugang zu Biodiesel vereinfacht.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

Die Bestimmung des Gehaltes an Alkalimetall-Glyceraten erfolgt durch potentiometrische Titration. Dabei wird das Glycerat durch fünfminütiges Rühren in demineralisiertem Wasser gelöst und mit 0,25 molarer Schwefelsäuremaßlösung bis zum Äquivalenzpunkt titriert.

Der Wassergehalt wird nach DIN 51777 "*Bestimmung des Wassergehaltes nach Karl-Fischerdirektes Verfahren*" bestimmt. Das Lösungsmittel ist Methanol, die Detektion erfolgt amperometrisch an einer Doppelplatin-Elektrode.

Der Seifengehalt wird durch Titration nach der Einheitsmethode der DGF (Deutsche Gesellschaft für Fettwissenschaft), Methode C-III 15 (97) "*Seife in Ölen und Fetten*", veröffentlicht in "Deutsche Einheitsmethoden zur Untersuchung von Fetten, Fettprodukten, Tensiden und verwandten Stoffen" ermittelt. Die Probe wird dabei in Ethanol oder Aceton gelöst und mit 0,1 molarer Salzsäure gegen Bromphenolblau als Indikator titriert. Alternativ kann der Endpunkt potentiometrisch ermittelt werden.

Die Säurezahl wird durch Titration entsprechend der Normmethode EN 14104:2003 *"Erzeugnisse aus pflanzlichen und tierischen Fetten und Ölen - Fettsäure-Methylester (FAME) - Bestimmung der Säurezahl"* ermittelt. Ein Probenteil wird dabei in einem Lösungsmittelgemisch gelöst und mit einer verdünnten Kaliumhydroxid-Lösung titriert. Als Indikator zur Endpunktermittlung der Titration dient Phenolphthalein. Alternativ kann der Endpunkt potentiometrisch ermittelt werden.

### I) Herstellung von Alkaliglyceratlösungen in Glycerin:

### 1. 10 %-ige Lösung von Kaliumglycerat in Glycerin mit Hilfe eines Schleppmittels:

461 g (5.0 mol) Glycerin (Pharmaqualität) und 200 g Toluol werden bei Normaldruck zum Sieden erhitzt. Langsam werden 40 g (0.36 mol) 50 %-iger wässriger KOH-Lösung zudosiert, wobei am Wasserabscheider (ebenfalls mit Toluol gefüllt) innerhalb von ca. 3 Stunden 55 g Wasser ausgekreist werden.

Toluolspuren im Produkt werden bei 100 bis 15 mbar und 90°C am Rotationsverdampfer entfernt.

| | | |
|---|---|---|
| Analytik: | Gehalt an Kaliumglycerat | 10 Gew.-% |
| | Wassergehalt: | 0.1 Gew.-% |
| | Viskosität: | 6000 mPa·s; |

### 2. 10 %-ige Lösung von Kaliumglycerat in Glycerin ohne Schleppmittel:

461 g (5.0 mol) Glycerin (Pharmaqualität) und 41 g (0.36 mol) 50 %-iger wässrige KOH-Lösung werden im Vakuum (109 °C, 70 mbar) zum Sieden erhitzt und Wasser wird abdestilliert. Gegen Ende der Destillation wird der Druck auf ca. 30 mbar reduziert.

Man erhält 470 g einer gelblich, klaren Lösung als Sumpfprodukt zurück.

| | | |
|---|---|---|
| Analytik: | Gehalt an Kaliumglycerat | 10.0 Gew.-% |
| | Wassergehalt: | 0.18 Gew.-% |
| | Viskosität: | 4200 mPa·s; |

### 3. 15%-ige Lösung von Kaliumglycerat in Glycerin mittels Dünnschichtverdampfer ohne Schleppmittel:

Eine auf 80°C vorgewärmte Mischung aus 921 g (10.0 mol) Glycerin (Pharmaqualität) und 124.4 g (1.1 mol) einer 50%-igen, wässrigen KOH-Lösung wird mit einer Dosierrate zwischen 500 mL/h und 750 mL/h bei einem Druck von 30 mbar über einen auf 150°C beheizten Dünnschichtverdampfer mit einem Durchmesser von 5cm und einer Länge von 40cm gefahren.

Man erhält eine 15.2%-ige Kaliumglycerat-Lösung mit einem Wassergehalt von 0.23%.

### 4. 4 %-ige Lösung von Kaliumglycerat in Glycerin aus seifenhaltigem Glycerin ohne Schleppmittel:

461 g Glycerin, welches ca. 10 % Kaliumseifen sowie kleine Mengen Methanol enthält wird mit 6 Tropfen Entschäumer TEGO 3062 (Evonik Goldschmidt GmbH) versetzt und im Vakuum vom Leichtsieder befreit. Anschließend werden 25 g (0.22 mol) 50 %-iger wässriger KOH-Lösung zugesetzt und bei 119 °C und 35 mbar ca. 12.5 g Wasser abdestilliert.

Man erhält 405 g einer gelblich, klaren Lösung als Sumpfprodukt zurück.

| | | |
|---|---|---|
| Analytik: | Gehalt an Kaliumglycerat | 4.1 Gew.-% |
| | Wassergehalt: | 0.32 Gew.-% |
| | Viskosität: | 35000 mPa·s; |

### 5. 15 %-ige Lösung von Kaliumglycerat in Glycerin aus seifenhaltigem Glycerin:

513 g Glycerin mit einem Gehalt von 10.1 % Kaliumseifen, 250 g Toluol und 6 Tropfen Entschäumer TEGO 3062 (Evonik Goldschmidt GmbH) werden auf 110 °C erhitzt. Es werden 56 g (0.5 mol) 50 %-iger wässriger KOH-Lösung zudosiert und zugleich Wasser am Wasserabscheider abdestilliert.

Anschließend wird im Vakuum bei 16 mbar und 95 °C das Schleppmittel Toluol abdestilliert.

Man erhält 529 g einer viskosen, gelben Flüssigkeit

| | | |
|---|---|---|
| Analytik: | Gehalt an Kaliumglycerat | 15.9 Gew.-% |
| | Wassergehalt: | 0.05 Gew.-% |

### 6. 20 %-ige Lösung von Natriumglycerat in Glycerin mit Hilfe eines Schleppmittels:

461 g (5.0 mol) Glycerin (Pharmaqualität) und 200 g Toluol werden bei Normaldruck zum Sieden erhitzt. Langsam werden 80 g (1.0 mol) 50 %-iger wässriger NaOH-Lösung zudosiert, wobei am Wasserabscheider (ebenfalls mit Toluol gefüllt) innerhalb von ca. 8 Stunden 110 g Wasser ausgekreist werden.

Anschließend wird Toluol zunächst per Phasentrennung und danach noch enthaltene Spuren bei 100 bis 15 mbar und 90 °C am Rotationsverdampfer entfernt.

| | | |
|---|---|---|
| Analytik: | Gehalt an Natriumglycerat | 20 Gew.-% |
| | Wassergehalt: | 0.21 Gew.-% |

### 7. 5%-ige Lösung von Natrium-glycerat in Glycerin aus Natriummetall:

Zu 221.4 g (1.2 mol) Glycerin werden unter rühren 2.2 g (0.1 mol) Natriummetall gegeben. Die Mischung wird auf ca. 80°C erwärmt. Es wird solange weitergerührt, bis keine Wasserstoffentwicklung mehr zu beobachten ist und das Natrium vollständig in Lösung gegangen ist (ca. 10h). Man erhält eine farblose Lösung

| | | |
|---|---|---|
| Analytik: | Gehalt an Natriumglycerat | 4.6 Gew.-% |
| | Wassergehalt: | 0.12 Gew.-% |

### 8. Einstellung der Viskosität einer Kalium-glycerat-Lösung in Glycerin mit Methanol:

a) Eine 15%-ige Lösung von Kaliumglycerat-Lösung in Glycerin mit einer Viskosität von ca. 6800 mPa·s wird mit 5 Gew.-% Methanol versetzt und intensiv gerührt. Man erhält eine Mischung mit einer Viskosität von 2581 mPa·s.
b) Eine 15%-ige Lösung von Kaliumglycerat-Lösung in Glycerin mit einer Viskosität von ca. 6800 mPa·s wird mit 10 Gew.-% Methanol versetzt und intensiv gerührt. Man erhält eine Mischung mit einer Viskosität von 1127 mPa·s.

### II) Entsäuerung und Trocknung von Fettsäureestern:

### 1. Behandlung eines fettsäurehaltigen Triglycerides:

410 g eines Rapsöls mit einer Säurezahl von 5.0 mg KOH/g wird mit 46.5 g einer 9.9 Gew.-%-igen Kaliumglyceratlösung (mit einem Wassergehalt von 0.18 %) in Glycerin versetzt und 10 Minuten gerührt. Anschließend wird das Gemisch in einen Scheidetrichter überführt. Nach 1.5 Stunden wird eine Phasentrennung durchgeführt.

Man erhält 396 g einer leichten Phase (neutralisiertes Rapsöl) mit einer Säurezahl von 0.6 mg KOH/g und einem Wassergehalt von 0.01 Gew.-%; der Gehalt an Kalium-Seifen beträgt 342 mg/kg.

Weiterhin erhält man 45.4 g einer schweren Phase (Glycerinphase) mit einem Seifengehalt von 18.9 Gew.-%.

Für die Umwandlung des behandelten Rapsöls in Biodiesel ist ein wesentlich niedrigerer Katalysatoreinsatz erforderlich als für das unbehandelte Rapsöl, da weniger alkalischer Katalysator durch Fettsäuren neutralisiert wird.

### 2. Behandlung eines fettsäurehaltigen, wasserhaltigen Triglycerides:

428 g eines Rapsöls mit einer Säurezahl von 9.3 mg KOH/g und einem Wassergehalt von 1.96 Gew.-% wird mit 81.4 g einer 15.9 Gew.-%-igen Kaliumglyceratlösung in Glycerin (Wassergehalt: 0.05 %), welche ca. 10 Gew.-% Seifen enthält, versetzt und 10 Minuten gerührt. Anschließend wird das Gemisch in einen Scheidetrichter überführt. Nach 1.5 Stunden wird eine Phasentrennung durchgeführt.

Man erhält 403 g einer leichten Phase (neutralisiertes Rapsöl) mit einer Säurezahl von <0.1 mg KOH/g und einem Wassergehalt von 0.08 Gew.-%; der Gehalt an Kalium-Seifen beträgt 972 mg/kg.

Weiterhin erhält man 96.0 g einer schweren Phase (Glycerinphase) mit einem Seifengehalt von 27.1 % und einem Wassergehalt von 7.8 Gew.-%.

Für die Umwandlung des behandelten Rapsöls in Biodiesel ist ein wesentlich niedrigerer Katalysatoreinsatz erforderlich als für das unbehandelte Rapsöl, da weniger alkalischer Katalysator durch Fettsäuren neutralisiert wird.

### 3. Behandlung eines fettsäurehaltigen Biodiesels:

400 g eines Rapsmethylesters mit einer Säurezahl von 10.7 mg KOH/g und einem Fettsäuremethylestergehalt von 95.6 % werden mit 97.5 g einer 9.7 Gew.-%-igen Kaliumglyceratlösung in Glycerin (seifenfrei, Wassergehalt 0.54 Gew.-%) versetzt und bei 40 °C verrührt. Anschließend wird das Reaktionsgemisch für 60 Minuten in einen Scheidetrichter gegeben, wobei sich schnell 2 Phasen ausbilden. Die untere Glycerinphase wird abgetrennt.

Man erhält 361 g einer oberen, leichten Rapsmethylesterphase mit einer Säurezahl von 0.17 mg KOH/g, einem Wassergehalt von 0.013 Gew.-% und einem Fettsäuremethylester-gehalt von 99 Gew.-%.

### 4. Behandlung eines fettsäurehaltigen Biodiesels:

396 g eines Rapsmethylesters mit einer Säurezahl von 2.51 mg KOH/g und einem Fettsäuremethylestergehalt von 95.4 Gew.-% werden mit 14.6 g einer 14.9 Gew.-%-igen Kaliumglyceratlösung in Glycerin (seifenfrei, Wassergehalt 0.32 Gew.-%) versetzt und bei 65 °C verrührt. Anschließend wird das Reaktionsgemisch für 60 Minuten in einen Scheidetrichter gegeben, wobei sich schnell 2 Phasen ausbilden. Die untere Glycerinphase wird abgetrennt. Die obere Phase (393 g) wird sukzessive mit verdünnter Salzsäure und Wasser gewaschen und anschließend am Rotationsverdampfer getrocknet.

Man erhält Rapsmethylester mit einer Säurezahl von 0.39 mg KOH/g, einem Wassergehalt von 0.025 Gew.-% und einem Fettsäuremethylestergehalt von 96.5 Gew.-%.

### 5. Vergleichsversuch, nicht erfindungsgemäß: Behandlung eines fettsäurehaltigen Biodiesels:

400 g eines Rapsmethylesters mit einer Säurezahl von 2.40 mg KOH/g und einem Fettsäuremethylestergehalt von 96.0 Gew.-% werden zweimal mit Wasser gewaschen und anschließend am Rotationsverdampfer getrocknet.

Man erhält 396.8 g Rapsmethylester mit einer Säurezahl von 2.37 mg KOH/g, und einem Fettsäuremethylestergehalt von 95.0 Gew.-%.

## Patentansprüche

1. Zusammensetzungen umfassend mindestens ein Alkalimetall- oder Erdalkalimetall-Glycerat und Glycerin, wobei der Wassergehalt maximal 3 Gew.-%, bezogen auf die Zusammensetzung, beträgt.

2. Zusammensetzungen gemäß Anspruch 1, **dadurch gekennzeichnet, dass** der Wassergehalt 0.01 bis 1 Gew.-%, bezogen auf die Zusammensetzung beträgt.

3. Zusammensetzungen gemäß Anspruch 1 oder 2, **dadurch gekennzeichnet, dass** der Anteil des Alkalimetall-Glycerates zwischen 3 und 40 Gew.-%, bezogen auf die Zusammensetzung, beträgt.

4. Zusammensetzungen gemäß einem oder mehreren der Ansprüche 1 bis 3, **dadurch gekennzeichnet, dass** das Metall für die Alkalimetall- oder Erdalkalimetall-Glycerate ausgewählt ist aus der Gruppe bestehend aus Lithium, Natrium, Kalium, Magnesium oder Calcium.

5. Zusammensetzungen gemäß einem oder mehreren der Ansprüche 1 bis 4, **dadurch gekennzeichnet, dass** Alkohol zugesetzt wird.

6. Zusammensetzungen gemäß Anspruch 5, **dadurch gekennzeichnet, dass** der Alkohol ausgewählt ist aus Methanol, Ethanol, Propanol oder n-Butanol.

7. Verfahren zur Herstellung von Zusammensetzungen gemäß einem oder mehreren der Ansprüche 1 bis 6, umfassend die Reaktion von Alkalimetall- oder Erdalkalimetallhydroxiden oder deren Lösungen mit Glycerin, wobei ein Wassergehalt von maximal 3 Gew.-%, bezogen auf die Zusammensetzung, eingestellt wird.

8. Verfahren gemäß Anspruch 7, **dadurch gekennzeichnet, dass** die Entfernung von Wasser bis auf einen Gehalt von maximal 3 Gew.-%, bezogen auf die Zusammensetzung destillativ erfolgt.

9. Verfahren gemäß Anspruch 8, **dadurch gekennzeichnet, dass** vor der Destillation ein Entschäumer zugegeben wird.

10. Verfahren gemäß einem oder mehreren der Ansprüche 7 bis 9, **dadurch gekennzeichnet, dass** bei der Herstellung Glycerin aus einem Biodieselprozess eingesetzt wird.

11. Verwendung von Zusammensetzungen gemäß einem oder mehreren der Ansprüche 1 bis 6 zur Entfernung von Fettsäuren aus fettsäurehaltigen Glyceriden oder Fettsäurealkylestern und/oder zur Trocknung von Glyceriden oder Fettsäurealkylestern.

12. Verfahren zur Entfernung von Fettsäuren aus fettsäurehaltigen Glyceriden oder Fettsäurealkylestern und/oder zur Trocknung von Glyceriden oder Fettsäurealkylestern, wobei eine Zusammensetzung gemäß einem oder mehreren der Ansprüche 1 bis 6 eingesetzt wird.

13. Verfahren gemäß Anspruch 12, **dadurch gekennzeichnet, dass** das entsprechende Glycerid oder der Fettsäurealkylester mit einer Zusammensetzung gemäß einem oder mehreren der Ansprüche 1 bis 6 gemischt wird und anschließend die entstandenen Phasen durch Phasentrennung getrennt werden.

14. Verfahren gemäß Anspruch 13, **dadurch gekennzeichnet, dass** die Phasentrennung mittels Schwerkraft oder mittels eines Separators oder einer Zentrifuge erfolgt.
